# EUROPEAN PATENT SPECIFICATION

(11) **EP 1 985 499 B1**
(45) Date of publication and mention of the grant of the patent: **27.01.2010**
(21) Application number: 07008479.3
(22) Date of filing: 26.04.2007
(51) Int. Cl.: B60R 9/10

(54) **Motorcycle carrier**
Motorradträger
Support de motocyclette

(43) Date of publication of application: 29.10.2008
(73) Proprietor: GM Global Technology Operations, Inc., Detroit, MI 48265-3000 (US)
(72) Inventor: Baccelli, Gian Luca, 65232 Taunusstein-Orlen (DE)
(74) Representative: Daniel, Ulrich W.P.

(56) References cited:
- WO-A-97/25221
- DE-A1- 4 320 975
- DE-A1-102004 021 709
- US-A- 5 460 304

## Description

The invention relates to a motorcycle carrier for motor vehicles, e.g. for passenger cars.

In quite a few cases the driver of a passenger car is interested in taking his motorcycle with him. For that purpose he can use a trailer for which a tow bar is needed.

DE 102 52 132 A1 discloses a carrier for a motor vehicle. In a first position the carrier is hidden within the car body. For using it it is drawn out of the rear of the body similar to a drawer. In the second position thus obtained the carrier can be used to carry bulky goods. A similar approach is chosen in DE 10 2004 021 709 A1.

Document WO 97/25221 A1 which corresponds to the preamble of claim 1 discloses a support device for mounting at the rear-end of vehicles. This device has two connection members carrying on one side a transport frame protruding from the vehicle rear end and supporting on the other side the chassis. The connection members are formed from one sliding rail with a guidance and holding profile section, to which can be fixed as swiveling, folding and/or plug-in components both the transport frame as well as additional supporting members for transport material.

It is an object of an embodiment of the invention to provide a simplified and less expensive motorcycle carrier for motor vehicles.

This object is solved by the features of the independent claims. Further embodiments are described by the sub-claims.

A first embodiment relates to a motorcycle carrier for a motor vehicle. The carrier comprises a supporting frame which can be drawn out of the body of said motor vehicle and a holding device for securing the position of a motorcycle relative to the supporting frame.

The supporting frame is the movable part of the carrier and is fastened to a holder, whereby the holder is rigidly mountable to the body of said motor vehicle. The supporting frame can thus move relative to the car body, in most cases along its longitudinal axis. The movement may be a sliding movement. The movement is similar to a drawer, such that the carrier is hidden within the body in a first position, and is outside the body in a second position. In the second position the carrier is ready for use. As a starting point a carrier as described in DE 102 52 132 A1 can be used. In addition to the carrier described in this document, the carrier has a holding device for securing the position of a motorcycle relative to the supporting frame. When towing a motorcycle, its front wheel will rest on the supporting frame and the rear wheel will rest on the street.

The embodiment avoids an expensive trailer and an additional tow bar for the motor vehicle and uses a relatively small, lightweight and inexpensive carrier instead. The carrier forms an integral part of the motor vehicle and needs no extra storage space as it is the case when a trailer is used. Furthermore, the carrier can be used for other purposes as well, for example for transporting bicycles or other bulky goods, which in normal cases do not require a complex trailer.

The holding device further comprises foldable elements to reduce its size when it is not needed. For that purpose elements with hinges can be used, e.g. by selecting a hinged rod assembly.

The holding device further has a mounting plate which is fastened to the supporting frame. The mounting plate reduces local mechanical stress of the supporting frame.

Preferably the mounting plate is removably fastened to the supporting frame. This facilitates a multipurpose use of the carrier, as the sub-unit of mounting plate and holding device may not be needed or may even be a hindrance when the carrier should be used for other purposes.

In a further embodiment the carrier comprises telescopic rails leading the supporting frame through the bumper. The telescopic rails may be fastened to or may be introduced into the longitudinal beams of the underbody and enable a linear movement of the supporting frame relative to the body. In the second position of the carrier, when the supporting frame is drawn out of the body, a portion of the bumper including the number plate is also drawn out.

In a further embodiment the whole bumper, being fastened to the supporting frame, can be drawn out of the body of said motor vehicle. In this case the bumper is securely and rigidly connected to the supporting frame, such that drawing out the supporting frame automatically means that the whole bumper is drawn out as well.

As an alternative to the embodiment of the last paragraph, only a central portion of the bumper carrying the number plate is fastened to the supporting frame and can be drawn out of the body of said motor vehicle. In this case the width of the supporting frame is smaller than the width of the bumper and corresponds roughly to the width of the number plate. This solution is mechanically easier to implement in comparison to the embodiment of the last paragraph, partly because the weight of the supporting frame and the associated portion of the bumper is smaller. Furthermore the cabling of the rear lights needn't be changed and the protection of the lower car body by means of the bumper is better.

Another embodiment suggests that the holding device is attachable to a front fork of the motorcycle. In principle any mechanical fastening means can be used to secure the position of the motorcycle relative to the carrier. The holding device may be a rod assembly to which the motorcycle can be fastened with screw bolts.

Another embodiment suggests that the carrier comprises a cavity for housing at least a portion of the holding device. The cavity serves to store the holding device when it is not needed which again facilitates a multipurpose use of the carrier.

Another aspect of the invention relates to a motor vehicle having a motorcycle carrier as described above.

Further elements and advantages of the claimed invention will be apparent from the following detailed description with reference to the accompanying drawings. This description should be understood to represent nonlimiting examples of the invention. Furthermore, the use of reference signs in the drawings shall not be understood as limiting the scope of the claimed invention.
- Fig. 1: depicts a motor vehicle with a first embodiment of a motorcycle carrier,
- fig. 2: depicts the motorcycle carrier with a motorcycle fastened to it,
- fig. 3: depicts a holding device,

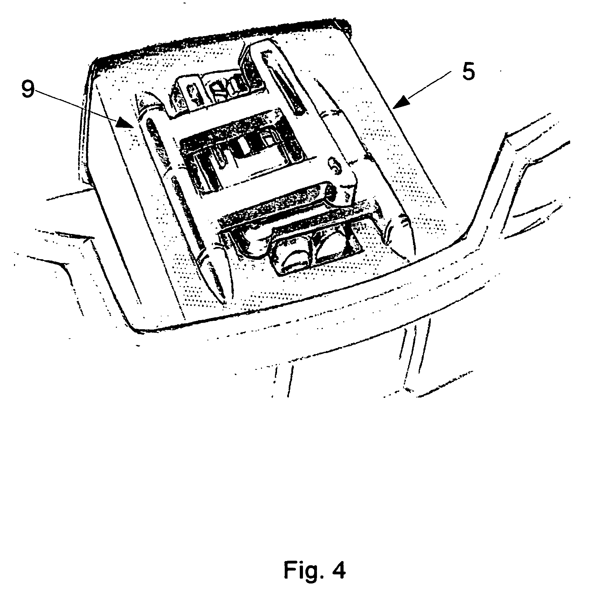

- fig. 4: depicts the folded holding device,
- fig. 5: depicts a motor vehicle with a second embodiment of a motorcycle carrier.

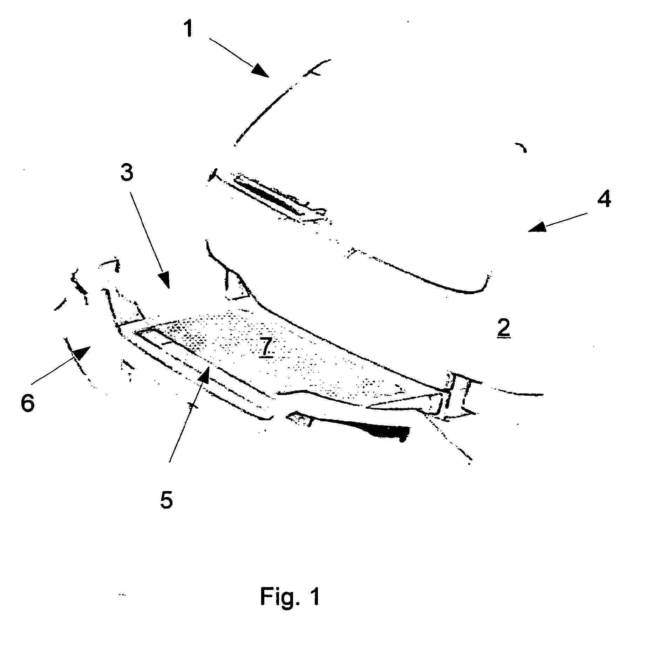

Figure 1 shows the rear end of a motor vehicle 1 having a rear door 2. The motor vehicle 1 has a motorcycle carrier 3 which is shown in its operational position, i.e. when it is drawn out of the body 4 of the motor vehicle 1. In this position the carrier comprises telescopic rails (not shown) leading the supporting frame 5 through the bumper 6, whereby a portion of the bumper 6 is also drawn out. The motorcycle carrier 3 is thus an integral part of the motor vehicle 1 and is invisible when it is not drawn out of the body 4. This means that this lightweight and inexpensive solution does not require any storage space when it is not needed.

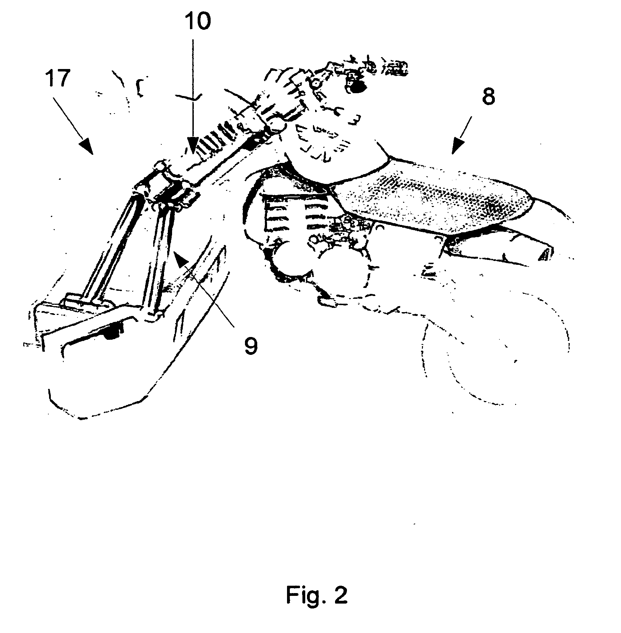

When a cover 7 of the motorcycle carrier 3 is taken away a motorcycle 8 can be fastened to the motorcycle carrier 3 as it is shown in figure 2. For that purpose a holding device 9 is fastened to the front fork 10 of motorcycle 8.

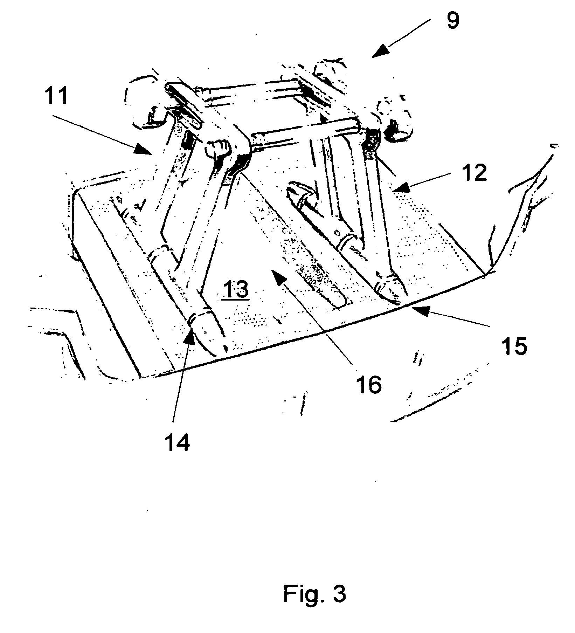

Figure 3 shows details of the holding device 9. It is a rod assembly comprising two elements 11, 12 which are attached to the mounting plate 13 by hinges 14 and 15 respectively. The hinged holding device 9 is thus foldable such that less space is required to store it when it is not needed. For that purpose a cavity 16, which also serves to accommodate a portion of the front wheel 17, can be used.

The mounting plate 13 is removably fastened to the supporting frame 5. When no motorcycle 8 should be towed the mounting plate 13 with the holding device 9 can be removed from the motorcycle carrier 3. In this case the motorcycle carrier 3 can be used for transporting other goods. In this physical form the motorcycle carrier 3 becomes a multipurpose carrier.

The embodiment shown above in Fig. 1 or Fig. 2 assumes that the whole bumper 6 is securely and rigidly fastened to the supporting frame 5. As a consequence, it is not only the supporting frame which slides out of the body 4, but also the whole bumper 6.

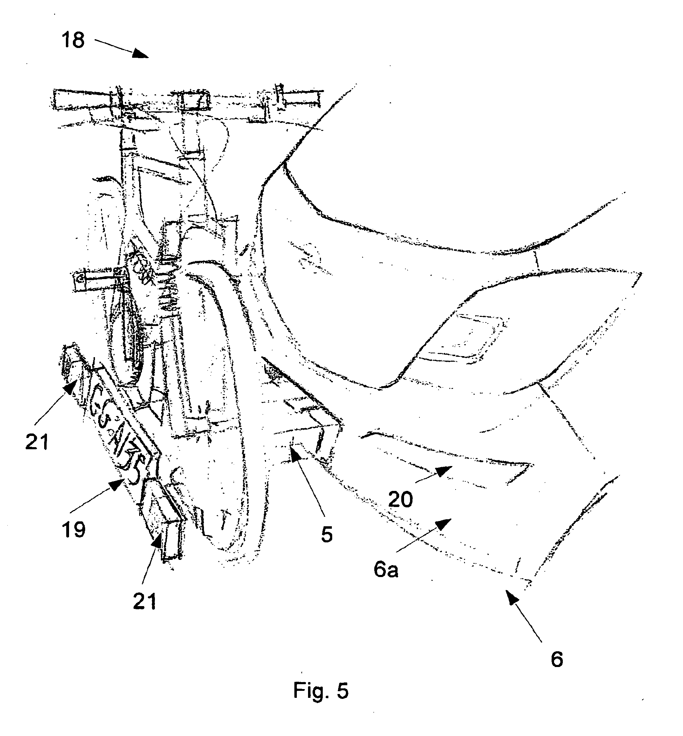

In the alternative only a portion of the bumper 6 is rigidly fastened to the supporting frame and is drawn out with it. This is shown in Fig. 5, where the motorcycle carrier 3 is used to carry a bicycle 18. The bumper 6 is made up of peripheral parts 6a on both sides of the number plate 19, whereby the peripheral parts 6a remain fixed with respect to the car body 4. Only the central portion of the bumper 6 which includes the number plate 19 is drawn out for carrying the bicycle 18. This solution is mechanically easier as the total weight of the sliding parts is smaller. Furthermore, cabling of the rear lights need not be changed, although auxiliary rear lights 21 might be desirable.

Although particular embodiments of the invention have been described, it should be understood that these are not intended to limit the invention to the particular from disclosed.

### List of reference numerals

- 01: motor vehicle
- 02: rear door
- 03: motorcycle carrier
- 04: body
- 05: supporting frame
- 06: bumper
- **6a**: **peripheral part**
- 07: cover
- 08: motorcycle
- 09: holding device
- 10: front fork
- 11: element
- 12: element
- 13: mounting plate
- 14: hinge
- 15: hinge
- 16: cavity
- 17: front wheel
- 18: bicycle
- 19: number plate
- 20: rear light
- 21: auxiliary rear light

## Claims

1. Motorcycle carrier (3) for a motor vehicle (1), comprising
a) a supporting frame (5) which can be drawn out of the body (4) of said motor vehicle,
b) a holding device (9) for securing the position of a motorcycle (8) relative to the supporting frame, **characterized by** a mounting plate (13) which is removably fastened to the supporting frame (5) and whereby the holding device (9) comprises foldable elements (11, 12) attached to the mounting plate (13) by means of hinges (14, 15).

2. Motorcycle carrier according to claim 1, whereby the carrier comprises telescopic rails leading the supporting frame through the bumper (6).

3. Motorcycle carrier according to any preceding claim, whereby the whole bumper, being fastened to the supporting frame, can be drawn out of the body (4) of said motor vehicle.

4. Motorcycle carrier according to any preceding claim, whereby only a central portion of the bumper carrying the number plate (19) is fastened to the supporting frame and can be drawn out of the body (4) of said motor vehicle.

5. Motorcycle carrier according to any preceding claim, whereby the holding device is attachable to a front fork (10) of the motorcycle.

6. Motorcycle carrier according to any preceding claim, whereby the carrier comprises a cavity (16) for housing at least a portion of the holding device.

7. Motor vehicle having a motorcycle carrier according to any preceding claim.

## Patentansprüche

1. Motorradträger (3) für ein Kraftfahrzeug (1), der Folgendes umfasst:
a) einen Tragrahmen (5), der aus der Karosserie (4) des Kraftfahrzeugs heraus gezogen werden kann,
b) eine Haltevorrichtung (9) zur Sicherung der Position eines Motorrads (8) im Verhältnis zum Tragrahmen, **gekennzeichnet durch** eine Montageplatte (13), die abnehmbar am Tragrahmen (5) befestigt ist und wobei die Haltevorrichtung (9) umlegbare Elemente (11, 12) umfasst, die an der Montageplatte (13) mittels Gelenken (14, 15) festgemacht sind.

2. Motorradträger gemäß Anspruch 1, wobei der Träger Teleskopschienen umfasst, welche den Tragrahmen durch den Stoßfänger (6) führen.

3. Motorradträger gemäß einem der vorangehenden Ansprüche, wobei der gesamte Stoßfänger, der am Tragrahmen befestigt ist, aus der Karosserie (4) des Kraftfahrzeugs heraus gezogen werden kann.

4. Motorradträger gemäß einem der vorangehenden Ansprüche, wobei nur ein Mittelteil des die Kennzeichentafel (19) tragenden Stoßfängers am Tragrahmen befestigt ist und aus der Karosserie (4) des Kraftfahrzeugs gezogen werden kann.

5. Motorradträger gemäß einem der vorangehenden Ansprüche, wobei die Haltevorrichtung an einer vorderen Gabel (10) des Motorrads festgemacht werden kann.

6. Motorradträger gemäß einem der vorangehenden Ansprüche, wobei der Träger einen Hohlraum (16) zur Unterbringung mindestens eines Teils der Haltevorrichtung umfasst.

7. Kraftfahrzeug mit einem Motorradträger gemäß einem der vorangehenden Ansprüche.

## Revendications

1. Transporteur de motocyclette (3) pour un véhicule à moteur (1), comprenant
a) un cadre de support (5) qui peut être retiré du corps (4) dudit véhicule à moteur,
b) un dispositif de fixation (9) pour sécuriser la position d'une motocyclette (8) relatif au cadre de support, **caractérisé par** une plaque de montage (13) qui est attachée de façon amovible au cadre de support (5) et où le dispositif de fixation (9) comprend des éléments pliables (11, 12) fixés à la plaque de montage (13) au moyen de charnières (14, 15).

2. Transporteur de motocyclette selon la revendication 1, où le transporteur se compose de rails télescopiques emmenant le cadre de support au travers du pare-chocs (6).

3. Transporteur de motocyclette selon l'une des revendications précédentes, où le pare-chocs dans son intégralité, étant fixé au cadre de support, peut être retiré du corps (4) dudit véhicule à moteur.

4. Transporteur de motocyclette selon l'une des revendications précédentes, où seule une partie centrale du pare-chocs comportant la plaque d'immatriculation (19) est fixée au cadre de support et peut être retirée du corps (4) dudit véhicule à moteur.

5. Transporteur de motocyclette selon l'une des revendications précédentes, où le dispositif de fixation peut être fixé à une fourche avant (10) de la motocyclette.

6. Transporteur de motocyclette selon l'une des revendications précédentes, où le transporteur comprend une cavité (16) pour abriter au moins une partie du dispositif de fixation.

7. Véhicule à moteur disposant d'un transporteur de motocyclette selon l'une des revendications précédentes.
